(19)

Europäisches
Patentamt
European
Patent Office
Office européen
des brevets

(11) **EP 3 404 615 A1**

(12) **EUROPEAN PATENT APPLICATION**

(43) Date of publication:
**21.11.2018 Bulletin 2018/47**

(51) Int Cl.:
***G06T 11/00*** *(2006.01)*

(21) Application number: **17171477.7**

(22) Date of filing: **17.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Koninklijke Philips N.V.
5656 AE Eindhoven (NL)**

(72) Inventors:
• **BERGNER, Frank
  5656 AE Eindhoven (NL)**
• **BRENDEL, Bernhard Johannes
  5656 AE Eindhoven (NL)**
• **KOEHLER, Thomas
  5656 AE Eindhoven (NL)**

(74) Representative: **de Haan, Poul Erik et al
Philips International B.V.
Philips Intellectual Property & Standards
High Tech Campus 5
5656 AE Eindhoven (NL)**

(54) **ITERATIVE IMAGE RECONSTRUCTION/DE-NOISING WITH ARTIFACT REDUCTION**

(57) The present invention relates to an image data processing device (10) for processing an image that comprises an algorithm memory (12) and a processor (14). The algorithm memory (12) includes an algorithm that comprises a classifier that detects a specific type of artifact, such as a streak artifact in a patch of the image. Furthermore the algorithm comprises at least one of an iterative reconstruction or de-noising algorithm that reduces the specific type of artifact based on an output of the classifier. The processor (14) is used for iteratively reconstructing and/or de-noising the image from data representing the image based on the algorithm. In one embodiment the algorithm is configured to minimize a cost function comprising a data discrepancy term and a regularization term which comprises the classifier. The output of the classifier can thus be used as a penalty.

FIG. 1

EP 3 404 615 A1

**EP 3 404 615 A1**

**Description**

FIELD OF THE INVENTION

The present invention relates to an image data processing device for processing an image, an image data processing system, a method for iteratively reconstructing and/or de-noising images, and a computer program for iteratively reconstructing and/or de-noising images. In particular the present invention relates to iteratively reconstructing and/or de-noising images with reduction of specific types of artifacts. Data representing an image can be provided from image scanners, such as computed tomography (CT) scanners, positron emission tomography (PET) scanners, hybrid PET/CT systems, digital X-ray systems, magnetic resonance image (MRI) systems, ultra sonic (US) systems, tomosynthesis scanners, or the like.

BACKGROUND OF THE INVENTION

An image scanner for example in form of a computed tomography scanner acquires data representing an image, such as projection data in form of projections of a scanned subject or object by transmitting photons in multiple angles through the subject or object to an array of detectors. The data received at each detector represents the sum of the attenuation of the material of the subject or object through which the photons have passed.

The process of data acquisition can be described with $\mathbf{y} = A\boldsymbol{\mu} + \varepsilon$, wherein $\mathbf{y}$ is the received data representing the image, which can for example be image data in the same domain as $\boldsymbol{\mu}$ or projection data, e.g., in form of line integral values, $\boldsymbol{\mu}$ is the image data in form of attenuation coefficients, $A$ models the data acquisition process, *e.g. A* can be a unity matrix in case that $\mathbf{y}$ and $\boldsymbol{\mu}$ are in the same domain, while for computed tomography A models forward integral projections, and $\varepsilon$ is noise data. Reconstruction algorithms are being used in order to derive image data, i.e., attenuation coefficients of each voxel of the image from the data representing the image. Typically used reconstruction algorithms include analytical image reconstruction algorithms based on filtered back projection (FBP) and iterative image reconstruction algorithms. In many cases the inverse problem of calculating $\boldsymbol{\mu}$ from the above equation is ill-posed. To determine $\boldsymbol{\mu}$ the variational problem $\boldsymbol{\mu}^* = \text{argmin}_{\boldsymbol{\mu}} L(\boldsymbol{\mu}) = \text{argmin}_{\boldsymbol{\mu}}(f(\mathbf{y}, A\boldsymbol{\mu}) + \beta R(\boldsymbol{\mu}))$ can be solved, wherein $L(\boldsymbol{\mu})$ is the cost function, $f(\mathbf{y}, A\boldsymbol{\mu})$ represents a data discrepancy or data mismatch term that measures the discrepancy between a candidate solution $\boldsymbol{\mu}$ and the data representing the image $\mathbf{y}$, $R$ is a regularization that penalizes images that do not match a prescribed model, and $\beta$ is a weighting factor.

Images that are reconstructed by a reconstruction algorithm can comprise reconstruction artifacts. In particular artifacts, such as line or streak artifacts near abrupt transitions between low attenuation materials and high attenuation materials such as metal or bone are inter alia a result of beam hardening and Compton scattering. Furthermore, streak artifacts occur when the detected number of photons is low. In this case the noise in the received data representing the image, e.g., line-integral values, $\mathbf{y}$ becomes very high compared to an average noise level. This effect is also known as photon starvation.

US 2014/0314331 A1 describes an image processing component, image processing system, and a method for iteratively de-noising images. The image data processing component includes an algorithm memory with an image domain only iterative de-noising algorithm. The de-noising algorithm is based on a Huber roughness penalty minimization. The de-noising algorithm considers neighboring voxels for de-noising a voxel of the image.

SUMMARY OF THE INVENTION

It can be seen as an object of the present invention to provide an image data processing device, an image data processing system, a method, and a computer program which allow a reduction of a specific type of artifact in reconstructed images.

In a first aspect of the present invention an image data processing device for processing an image is presented. The image data processing device comprises an algorithm memory and a processor. The algorithm memory includes an algorithm that comprises a classifier that detects a specific type of artifact in a patch of the image and at least one of an iterative reconstruction or de-noising algorithm that reduces the specific type of artifact based on an output of the classifier. The processor is configured for iteratively reconstructing and/or de-noising the image from data representing the image based on the algorithm.

Since the classifier detects a specific type of artifact in a patch of the image and the iterative reconstruction or de-noising algorithm reduces the specific type of artifact based on the output of the classifier, the specific type of artifact can be reduced in the reconstructed image.

The data representing the image can for example be image data in the measurement domain, such as projection data, detector intensity, photon count readings, events on a line-of-response in PET, a k-space measurement, or image data in the image domain, such as an image.

2

The algorithm can comprise the iterative reconstruction algorithm, or the iterative de-noising algorithm or both the iterative reconstruction algorithm and the iterative de-noising algorithm. Hence the algorithm can iteratively reconstruct the image, iteratively de-noise the image or iteratively reconstruct and de-noise the image when it is executed on the processor.

A patch is a subsection of an image that comprises a predetermined number of voxels for three dimensional images or a predetermined number of pixels for two dimensional images. The image that is reconstructed and/or de-noised by the algorithm can be a two dimensional or three dimensional image. A voxel represents a value on a regular grid in three dimensional space, e.g., corresponding to a value encoded with a relative position to neighboring voxels in three dimensional space. A pixel represents a value on a regular grid in two dimensional space, e.g., corresponding to a value encoded with a relative position to neighboring pixels in two dimensional space. The image can be divided into patches. The patches can be overlapping with neighboring patches or can have no overlap. The sum of all patches at least covers the whole image. Hence the patches subdivide the image in subimages that are easier to process. The generation of the patches can be performed by first selecting the parameters of a patch, i.e., number of pixels or voxels, e.g., 20x20 pixels or 30x30x30 voxels for a patch, and dividing the image into patches. The patches can be overlapping, such that some of the pixels or voxels are contained in two or more neighboring patches.

The classifier determines whether a specific patch of the image comprises the specific type of artifact and generates an output depending on the determination, i.e., the classifier classifies the patch of the image into the classes of containing or not containing the specific type of artifact. The classifier can be used in order to detect the specific type of artifact in all patches of the image or only in selected patches of the image, e.g., a selected region of the image.

The classifier can be differentiable. The output of the classifier can for example be a value in the continuous range between 0 and 1 or for example 10, 100, or any other scalar value. In this case a value of 0 stands for no artifact of the specific type and values above 0 stand for a probability above 0 of an artifact of the specific type to be present.

The algorithm memory can be any kind of memory for storing data, such as the algorithm, e.g., hard disk memory, read only memory, random access memory, cd, dvd, blu-ray, internet cloud provided memory, or the like.

The processor can be any kind of processing unit for processing algorithms or data, such as for example a central processing unit (CPU), integrated circuit (IC), or the like.

In one embodiment the algorithm comprises two or more classifiers. Alternatively or additionally the algorithm can comprise one or more classifiers that each detect two or more specific types of artifacts in a patch of the image.

In one embodiment the classifier is trained in a machine-learning process. The classifier can be trained with labeled patches from images which give an indication of a first value if the specific type of artifact is absent in the patch and a second value if the specific type of artifact is present in the patch. The first value can for example be smaller than the second value. The classifier can for example be trained with labeled patches from images which give a binary indication of 0 if the specific type of artifact is absent in the patch and 1 if the specific type of artifact is present in the patch. Hence the labeled patches of the image have either the label 0 if there is no artifact of the specific type and 1 if there is an artifact of the specific type. Therefore the classifier learns to detect the specific type of artifact that is presented in the labeled patches of the images. Only one specific type of artifact is presented in the patch of the image for the machine-learning process in the embodiment. Alternatively also various types of artifacts can be presented, such that one classifier can learn to detect various types of artifacts. Furthermore another classifier can be trained with labeled patches of another specific type of artifact in order to detect another specific type of artifact. The algorithm can comprise two or more classifiers that are trained for detecting different specific types of artifacts. Alternatively or additionally the algorithm can comprise one or more classifiers that each are trained to detect two or more specific types of artifacts. The image data processing device can comprise a training unit for training the classifier or the classifiers by the machine learning process. Alternatively the classifier or classifiers can be pretrained on an external training unit.

In one embodiment of the image data processing device the algorithm is configured to minimize a cost function comprising a data discrepancy term and a regularization term. The regularization term can comprise the classifier.

The data discrepancy term determines the discrepancy between a candidate solution, e.g., virtual data representing the image, and the received data representing the image. The regularization term penalizes images that do not correspond to a predetermined model. In particular images can be penalized that comprise the specific type of artifact.

The output of the classifier can hence be used as a penalty. The specific type of the artifact can for example be detected based on scalar output of the classifier. The scalar output of the classifier can for example be between 0 and 1. In this case an output of 0 corresponds to no artifact of the specific type in the patch of the image and an output above 0 implies the presence of an artifact of the specific type in the patch of the image. Hence, if the output of the classifier is 0, i.e., no artifact of the specific type is present, there is no penalty on the cost function. However, if there is an artifact of the specific type present in a patch the output of the classifier is above 0 and the cost function is increased. The scalar output of the classifier can also be above 1, e.g., 2, 5, 10, 100, or any other scalar value. As the cost function is to be minimized in order to estimate an optimized candidate solution the presence of the specific type of artifact acts like a penalty. Hence a higher scalar output of the classifier acts as a stronger penalty. The optimization process therefore tries to reduce the presence of the specific type of artifact in order to minimize the cost function.

Depending on the cost function and in particular the regularization term the scalar output of the classifier can also be negative, the value for detection of no artifact can be higher than the value for detection of an artifact, or the scalar output of the classifier can be negative and the value for detection of no artifact can be higher than the value for detection of an artifact. The cost function can for example have a negative weighting factor $\beta$ for the regularization term. Alternatively or additionally the cost function can be defined as $L(\mu) = f(\mathbf{y}, A\mu) + \beta R(\mu)$ or $L(\mu) = f(\mathbf{y}, A\mu) - \beta R(\mu)$. The cost function and the output of the classifier in such embodiments have to be such that the classifier acts like a penalty.

The regularization term with the classifier can be easily combined with iterative reconstruction and/or de-noising regularization terms known to the person skilled in the art, e.g., by adding the classifier to the regularization term known to the person skilled in the art or adding a regularization term known to the person skilled in the art to the regularization term with the classifier. The regularization term can for example be added to regularizations based on Gibbs priors or total variation (TV) regularizations. Furthermore two or more classifiers that each detect another type of specific artifact can be added to the regularization term.

$$\beta\sum_j \psi(Patch(\mu, j)),$$

The regularization term can comprise the term wherein $\beta$ is a weighting factor, and $\psi$ is the classifier applied to the function $Patch(\mu, j)$ that is configured to extract the $j$ -th patch out of the image $\mu$, i.e., the current reconstructed image. Hence the output values of the classifier for the different patches of the image are summed and weighted with the weighting factor $\beta$. The regularization term can be part of the cost function for iterative reconstruction or de-noising.

The discrepancy term of the cost function can comprise a log-likelihood function of a noise distribution present in the data representing the image. The noise distribution can for example be a Gaussian distribution or a Poisson distribution.

The cost function for de-noising can for example have the form:

$$L(\mu) = \sum_i \frac{(\mu_i - \hat{\mu}_i)^2}{\sigma_i^2} + \beta\sum_j \psi(Patch(\mu, j)),$$

wherein the first term is the data discrepancy term that describes a data noise model with the value of the $i$ -th voxel $\mu_i$, the value of the $i$ - th input voxel $\hat{\mu}_i$ and the value of the $i$-th statistical weight $\sigma_i$, and the second term is the regularization term. In this case the relationship between the specific type of artifacts in the patches of the image and the resulting correction depends on the classifier as the classifier penalizes images that comprise the specific types of artifact. However, due to the first term the reconstructed image is likely to be not too far off an input image, which has the characteristic that the difference between the input image and a de-noised image yields only noise with given standard deviation and artifacts. The minimization of the cost function therefore leads to an image that is close to the input image while the specific type of artifact is reduced. In an embodiment of the image data processing device the cost function can be differentiated with respect to each voxel $\mu_i$. In this case the cost function is optimized to be used for gradient based optimization algorithms.

The specific type of artifact in a patch of the image can for example be a streak artifact, a ring artifact, a beam hardening artifact, a metal artifact, a bias artifact in dual-energy images, an undershoot artifact, or any other type of artifact known to the person skilled in the art. Most of these artifacts can be easily discriminated from a normal patient anatomy by the person skilled in the art. The classifier can therefore be trained to identify these artifacts, e.g., by providing labeled patches with these artifacts in a machine learning process. In one embodiment the algorithm can comprise a classifier for detecting streak artifacts and one or more other classifiers for detecting undershoot artifacts or any other types of artifacts.

In one embodiment of the image data processing device, the classifier is selected from a group including a neuronal network or a support vector machine or other classification algorithms which have a scalar output, e.g. between 0 and 1, that is differentiable with respect to the input. The classifier can furthermore be a non-differentiable classifiers such as a decision tree. In this case the missing gradient of the output can for example be approximated numerically in order to use it with gradient-based update schemes. Subderivatives can for example be used as substitutes for the gradient for non-differentiable classifiers.

In one embodiment of the image data processing device the cost function comprises at least two different classifiers.

In one embodiment of the image data processing device the classifier depends on a parameter of a scan setting for receiving the data representing the image. As the classifier depends on the parameter of the scan setting, also the output of the classifier depends on the parameter of the scan setting. The parameter can for example be a kV setting of a scanner that is used for receiving data representing the image. The classifier can also depend on two or more parameters of a scan setting. The classifier can furthermore depend on more than one patch of an image, e.g., overlapping patches of images or two or more patches of an image received at two or more different points in time. The classifier can for example depend on an average patch of an image, averaged over multiple patches of the image or multiple patches of multiple images of the same object or subject, e.g., received from an image scanner using the same scanning angle. In one embodiment the classifier and therefore the output of the classifier depends on at least two patches of two images. In this case the classifier can for example detect an artifact if indications of the artifact are present in both patches or the probability of the presence of an artifact can be a weighted average of the result of each of the patches. The output of the classifier can also depend on two patches of two images which have been obtained with different scan settings, e.g., different radiation settings. The data can for example be received from spectral computed tomography imaging, where at least two images represent the attenuation values of different materials or different physical effects like the photo-electric effect and Compton scattering for the same object.

In one embodiment the image data processing device is configured to be used in an image data processing system. The image data processing device can for example be part of a personal computer, a computed tomography scanner, a tomosynthesis scanner, a positron emission tomography scanner, a hybrid PET/CT system, a digital X-ray system, a magnet resonance image system, or an ultra-sonic system. The image data processing system can for example be a personal computer, a computed tomography scanner, a tomosynthesis scanner, a positron emission tomography scanner, a hybrid PET/CT system, a digital X-ray system, a magnetic resonance image system, or an ultra sonic system.

In a further aspect of the present invention an image data processing system comprising an image data processing device according to the invention or an embodiment of the invention is presented. The image data processing system comprises a receiving unit for receiving data representing the image. The receiving unit is configured to supply the received data representing the image to the image data processing device for iteratively reconstructing and/or de-noising the image from the data representing the image.

The receiving unit can for example be a detector of an image scanner for scanning an object or subject, such as a detector of a computed tomography scanner, positron emission tomography scanner, hybrid PET/CT system, digital X-ray system, magnetic resonance image system, ultra sonic system, tomosynthesis scanner, or the like. The detector of the image scanner can be configured to provide data representing the image obtained from scanning the object or subject to the image data processing device. The receiving unit can alternatively be configured to receive data representing the image from an external device, e.g., a detector of an image scanner, an external data base, or any other unit that provides data representing the image.

In one embodiment the image data processing system is a computed tomography scanner or a tomosynthesis scanner. The image data processing system can for example furthermore be a personal computer, a positron emission tomography scanner, a hybrid PET/CT system, a digital X-ray system, a magnetic resonance image system, or an ultra sonic system. The image data processing system can also comprise one or more image scanners.

In one embodiment the image data processing system comprises a user interface. The user interface is configured to receive data from a user using the image data processing system and to provide images reconstructed and/or de-noised by the image data processing system to the user using the user interface.

The user interface can for example be a touch display or any other device that allows a user to interact with the image data processing system, e.g., a display and control buttons.

The user interface can also be configured to control or enable the user to control the image data processing system and/or the image data processing device, for example by controlling a scan that generates data representing the image or adjusting parameters of the algorithms that reconstruct and/or de-noise the image from data representing the image.

In a further aspect of the present invention a method for iteratively reconstructing and/or de-noising an image is presented. With the method the image is reconstructed and/or de-noised from data representing the image based on an algorithm that comprises a classifier that detects a specific type of artifact in a patch of the image. The algorithm comprises at least one of an iterative reconstruction or de-noising algorithm that reduces the specific type of artifact based on the output of the classifier.

The classifier can be trained in a machine-learning process. The method can be used for iteratively reconstructing the image, iteratively de-noising the image or iteratively reconstructing and de-noising the image.

In one embodiment the method for iteratively reconstructing and/or de-noising the image comprises the steps:

- receiving the data representing the image,
- estimating an initial reconstruction of the image,
- dividing the reconstructed image into patches,
- detecting the specific type of artifact in a patch of the image based on the classifier,
- minimizing a cost function comprising a data discrepancy term and a regularization term that penalizes images with the specific type of artifact detected by the classifier, and
- estimating the reconstructed image based on the minimization of the cost function. The steps dividing the reconstructed image into patches, detecting the specific type of artifact in a patch of the image based on the classifier, minimizing a cost function comprising a data discrepancy term and a regularization term that penalizes images with the specific type of artifact detected by the classifier, and estimating the reconstructed image based on the minimization of the cost function, are repeated until the occurrence of a predetermined event.

The step of detecting the specific type of artifact can for example be performed to detect whether the specific type of artifact is present in a specific patch of the image for each of the patches of the image or a subset of the patches of the image.

In one embodiment the method for iteratively reconstructing the image comprises the steps:

- receiving the data representing the image,
- estimating an initial reconstruction of the image,
- dividing the reconstructed image into patches,
- detecting the specific type of artifact in a patch of the image based on the classifier,
- calculating virtual data representing the image of the estimated reconstruction of the image,
- minimizing a cost function comprising a data discrepancy term that calculates an error between the virtual data representing the image and the received data representing the image and a regularization term that penalizes images with the specific type of artifact detected by the classifier, and
- estimating the reconstructed image based on the minimization of the cost function. The steps dividing the reconstructed image into patches, detecting the specific type of artifact in a patch of the image based on the classifier, calculating virtual data representing the image of the estimated reconstruction of the image, minimizing a cost function comprising a data discrepancy term that calculates an error between the virtual data representing the image and the received data representing the image and a regularization term that penalizes images with the specific type of artifact detected by the classifier, and estimating the reconstructed image based on the minimization of the cost function, are repeated until the occurrence of a predetermined event.

The occurrence of the predetermined event can for example be that a user stops the method, that a difference between the calculated error between the virtual data representing the image and the received data representing the image reaches a value below a predetermined threshold, that for two subsequent iterations the difference between two subsequent values of the cost function are below a predetermined threshold value or that the method was repeated for a predetermined number of steps.

In one embodiment the method for iteratively de-noising the image comprises the steps:

- receiving the data representing the image,
- estimating an initial reconstruction of the image,
- dividing the reconstructed image into patches,
- detecting the specific type of artifact in a patch of the image based on the classifier,
- minimizing a cost function comprising a data discrepancy term that comprises a log-likelihood function of a noise distribution present in the image, a regularization term that penalizes images with the specific type of artifact detected by the classifier, and a regularization term that penalizes image noise, and
- estimating the reconstructed image based on the minimization of the cost function. The steps dividing the reconstructed image into patches, detecting the specific type of artifact in a patch of the image based on the classifier, minimizing a cost function comprising a data discrepancy term that comprises a log-likelihood function of a noise distribution present in the image, a regularization term that penalizes images with the specific type of artifact detected by the classifier, and a regularization term that penalizes image noise, and estimating the reconstructed image based on the minimization of the cost function, are repeated until the occurrence of a predetermined event. The cost function for de-noising can for example have the form

$$L(\boldsymbol{\mu}) = \sum_i \frac{(\mu_i - \hat{\mu}_i)^2}{\sigma_i^2} + \beta_1 \sum_j \psi(Patch(\boldsymbol{\mu}, j)) + \beta_2 \phi(\boldsymbol{\mu}).$$

The first term is the data discrepancy term that describes a data noise model with value of $i$-th voxel $\mu_i$, value of $i$-th input voxel $\hat{\mu}_i$ and value of $i$-th statistical weight $\sigma_i$, the second term is the first regularization term with a first weighting factor $\beta_1$, and the classifier $\psi$ applied to the function $Patch(\boldsymbol{\mu}, j)$ that is configured to extract the $j$-th patch out of the image $\boldsymbol{\mu}$, i.e., a current de-noised image, and the third term is the second regularization term with a second weighting factor $\beta_2$, and a function $\phi(\boldsymbol{\mu})$ that penalizes image noise, for example the Huber roughness penalty or any other penalty or smoothness constraint that reduces image noise.

The occurrence of the predetermined event can for example be that a user stops the method, that for two subsequent iterations the difference between two subsequent values of the cost function are below a predetermined threshold value or that the method was repeated for a predetermined number of steps.

The method according to the invention or any embodiment of the method can for example be performed by the image data processing device according to the present invention or any of the embodiments of the image data processing device. The method can also for example be performed by the image data processing system according to the present invention or any of the embodiments of the image data processing system.

In a further aspect of the present invention a computer program for iteratively reconstructing and/or de-noising an image is presented. The computer program comprises program code means for causing a processor to carry out the method as defined in claim 13 or 14, when the computer program is run on the processor.

Other embodiments of the computer program can comprise program code means for causing a processor to carry out the method according to any of the embodiments of the method. The computer program can also be configured to be executed on the image data processing device, the image data processing system or the image data processing device and the image data processing system.

The computer program and embodiments of the computer program can be stored on a computer readable medium, such as for example a hard disk drive, random access memory, read only memory, cd, dvd, blu-ray, or any other storage means.

The computer readable medium can be configured to be used in a system connectable to the image data processing device or the image data processing system, e.g., an external network connected to the receiving unit of the image data processing system, or it can also be part of the image data processing device or image data processing system or used in the image data processing device or image data processing system, e.g., if the image data processing device or image data processing system is configured for receiving data from the computer readable medium.

It shall be understood that the image data processing device of claim 1, the image data processing system of claim 11, the method for iteratively reconstructing and/or de-noising an image of claim 13, and the computer program for iteratively reconstructing and/or de-noising an image of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

In the following drawings:

Fig. 1 schematically illustrates an embodiment of the image data processing system including an embodiment of the image data processing device,
Fig. 2 schematically illustrates an embodiment of the image data processing device,
Fig. 3 shows a schematic flow diagram of an embodiment of the method for iteratively reconstructing an image,
Fig. 4 shows a schematic flow diagram of an embodiment of the method for iteratively de-noising an image.

DETAILED DESCRIPTION OF EMBODIMENTS

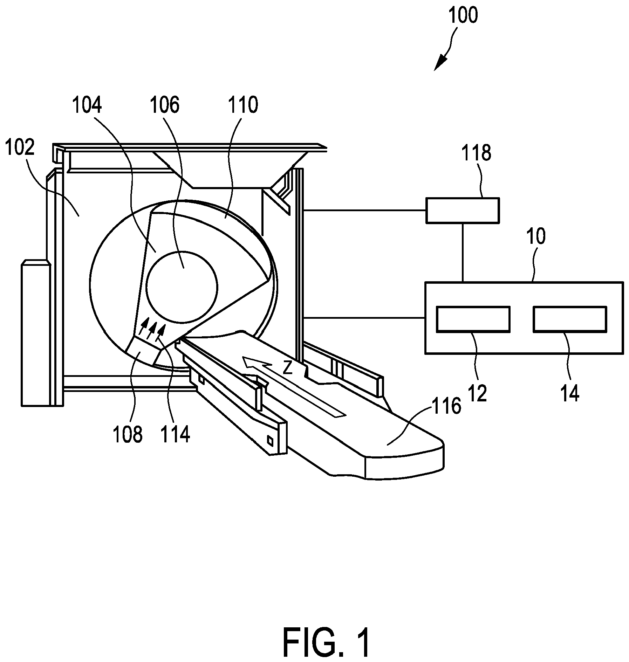

Fig. 1 shows schematically and exemplarily an embodiment of the image data processing system 100 including an embodiment of the image data processing device 10. This embodiment of the image data processing system 100 is a computed tomography scanner. In other embodiments the image data processing system 100 can for example be a personal computer, a positron emission tomography scanner, a hybrid PET/CT system, a digital X-ray system, a magnetic resonance image system, an ultra sonic system, or a tomosynthesis scanner.

The image data processing system 100 comprises a stationary gantry 102, a rotatable gantry 104, an examination region 106, a radiation source 108, a radiation sensitive detector array 110, a subject support 116, a user interface 118, and the image data processing device 10.

The rotatable gantry 104 is rotatably supported by the stationary gantry 102 in order to rotate around a z-axis of the examination region 106.

The radiation source 108 in this embodiment is an x-ray tube. The radiation source 108 and the radiation sensitive detector array 110 are rotatably supported by the rotatable gantry 104 and arranged around the examination region 106.

In order to perform a scan of a subject, the subject is arranged on the subject support 116 and moved into the examination region 106. The subject support 116 is movable along the z-axis in order to move the subject into the examination region 106.

The radiation source 108 emits radiation 114 that travels from the radiation source 108 through the examination region 106 and the subject (not shown) to the radiation sensitive detector array 110. The radiation sensitive detector array 110 hence receives data representing the image in form of a projection of one angle setting and therefore works as a receiving unit for receiving data representing the image. In order to reconstruct an image from the data representing the image it is necessary to receive projections from several angles. Therefore the radiation source 108 and the radiation sensitive detector array 110 are rotated around the examination region 106 to scan the subject. During the scan the radiation source 108 emits radiation 114 with several angles and the radiation sensitive detector array 110 receives that radiation 114 under several angles. The scanned angular range can for example be 180°, 270° or 360°.

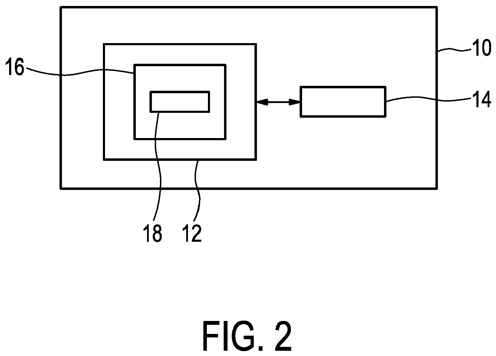

The radiation sensitive detector array 110 provides the data representing the image to the image data processing device 10. The image data processing device 10 comprises an algorithm memory 12 and a processor 14 and iteratively reconstructs and/or de-noises the image from the data representing the image. The process of iteratively reconstructing and/or de-noising the image from the data representing the image is explained with regard to the embodiment of the image data processing device 10 of Fig. 2.

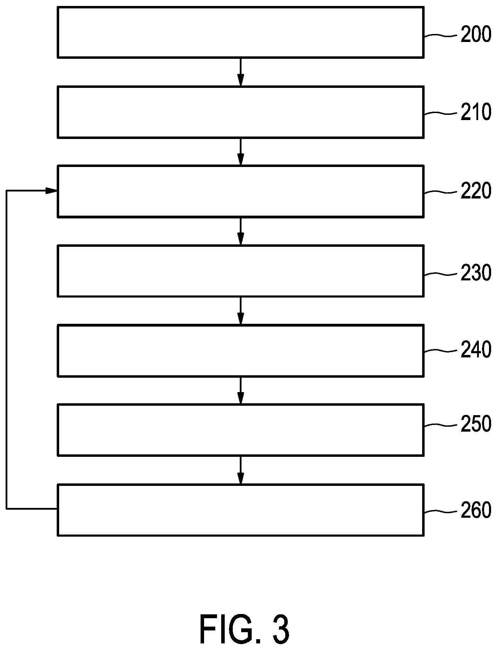

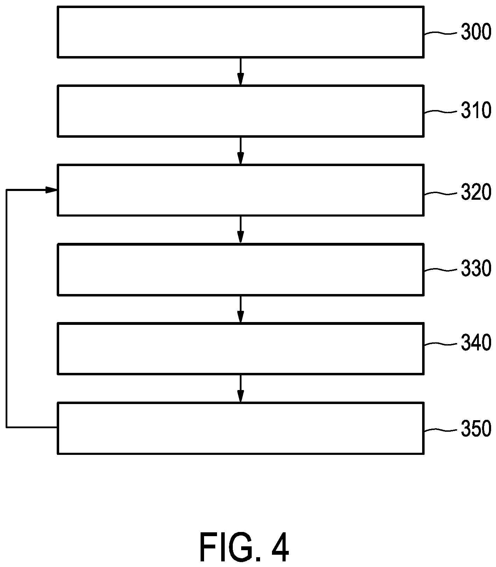

In this embodiment the image data processing device 10 furthermore comprises a computer program for iteratively reconstructing the image and a computer program for iteratively de-noising the image. The computer programs are stored in the algorithm memory 12. Each of the computer programs comprises program code means for causing the processor 14 to carry out the respective method as described for Fig. 3 and Fig. 4, when the computer program is run on the processor 14. Alternatively or additionally other computer programs can be included in the algorithm memory 12, e.g., for performing other image processing tasks, e.g. anti-aliasing, or image manipulation, such as drawing, measuring distances, or the like.

In an alternative embodiment the image data processing system 100 can comprise a receiving unit that receives data representing the image from an external device (not shown). The data can be received wirelessly or wired. The data representing the image can then be supplied to the image data processing device 10 from the receiving unit.

The user interface 118 in this embodiment is a touch display. The user interface 118 is optional and can be any other interface that enables an interaction between a user of the image data processing system 100 and the image data processing system 100, for example a personal computer or a screen, a keyboard and a mouse. The user interface 118 receives data from the user using the image data processing system 100, for example parameters such as a rotation angle or a range of angles to be scanned, a kV setting for the scan, or other parameters. The user interface 118 can also be used to control the image data processing system 100 and the image data processing device 10. The user can for example stop the algorithms performed on the image data processing device 10, e.g., by providing a predetermined number of iteration steps, stopping the algorithm manually or setting one or more predetermined threshold values.

The user interface 118 furthermore provides images reconstructed and/or de-noised by the image data processing system 100 to the user using the user interface 118.

In this embodiment of the image data processing system 100 the components of the system, i.e., the image data processing device 10, and the user interface 118 are connected by wire. Alternatively the components can also be wirelessly connected (not shown).

Although in the above described embodiment the image processing system 100 is adapted to process images of a subject, it can also be adapted to process images of an object. Therefore in particular the subject support 116 can be adapted for supporting objects (not shown).

Fig. 2 shows schematically and exemplarily an embodiment of the image data processing device 10. The image data processing device 10 comprises an algorithm memory 12 and a processor 14.

The image data processing device 10 is configured for processing an image. Therefore the image data processing device 10 receives data representing an image, for example from a receiving unit or in particular from a radiation sensitive detector array 110 (see Fig. 1). The data can either be stored in the algorithm memory 12 or it can be directly provided to the processor 14 for processing the image. The processor 14 processes the image and supplies the processed image to the user interface 118 (see Fig. 1). Alternatively the processed image can also be stored in the algorithm memory 12. The user interface 118 can be used to control the image data processing device 10 (see Fig. 1).

The algorithm memory 12 includes an algorithm 16 that comprises a classifier 18 that detects streak artifacts in a patch of the image. In this embodiment the classifier 18 is used in order to detect streak artifacts in each of the patches of the image.

The algorithm 16 comprises an iterative de-noising algorithm that reduces streak artifacts based on an output of the classifier 18. In other embodiments the algorithm 16 can comprise an iterative reconstruction algorithm or an iterative reconstruction algorithm and an iterative de-noising algorithm.

The classifier 18 is trained by a machine-learning process in order to determine the probability that a patch comprises a streak artifact or not. The classifier 18 is trained with labeled patches from images which give a binary indication of 0 if the streak artifact is absent in the patch and 1 if the streak artifact is present in the patch. The classifier 18 is differentiable and the output of the classifier 18 ranges from 0 corresponding to a patch that has no streak artifact to 1 corresponding to a patch that has a streak artifact with 100% probability. The classifier 18 is a neuronal network in this embodiment. In other embodiments the classifier 18 can also be for example a support vector machine or the like.

The classifier 18 is part of a regularization term $R(\mu)$ of a cost function $L(\mu) = f(\mathbf{y}, A\mu) + \beta R(\mu)$ that is minimized in order to estimate a reconstructed image. The output of the classifier 18 is thus used as a penalty. The cost function comprises a data discrepancy term and the regularization term. The weighted regularization term $\beta R(\mu)$ in this embodiment has the form $\beta \sum_j \psi(Patch(\mu, j))$ with weighting factor $\beta$, and classifier $\psi$ applied to the function $Patch(\mu, j)$ that is configured to extract the $j$-th patch out of a current image $\mu$. Hence the output values of the classifier 18 for the different patches of the image are summed and weighted with the weighting factor $\beta$. In this embodiment the function $Patch(\mu, j)$ returns the subvolume of 7 voxels in x-direction, 7 voxels in y-direction and 5 voxels in z-direction centered around the $j$-voxel of the volume. In other embodiments the function $Patch(\mu, j)$ may also return the subvolume of any other reasonable number of voxels in the x-, y-, and z- direction, such as 30 voxels in x-direction, 30 voxels in y-direction and 30 voxels in z-direction centered around the $j$-voxel of the volume. For voxel positions outside the volume suitable padding values, e.g. values from the edge voxels of the full volume or constant values or values based on mirroring the volume at the given edge of the volume, can be chosen for the sub volume. In other embodiments the patch size extracted by the function $Patch(\mu, j)$ can be determined during the course of the classifier training in such a way that the classifier performs best, i.e., is optimized.

In this embodiment the cost function for de-noising has the form:

$$L(\mu) = \sum_i \frac{(\mu_i - \hat{\mu}_i)^2}{\sigma_i^2} + \beta \sum_j \psi(Patch(\mu, j)).$$

The first term is the data discrepancy term that describes a data noise model with value of the $i$-th voxel $\mu_i$, value of the $i$-th input voxel $\hat{\mu}_i$ and value of the $i$-th statistical weight $\sigma_i$, and the second term is the aforementioned regularization term.

In this embodiment the classifier 18 does not depend on parameters of the scan settings for receiving the data representing the image. In other embodiments the classifier 18 can depend on parameters of the scan setting, e.g., energy setting, i.e., wavelength or frequency of the used radiation, or kV setting or the like.

Since the classifier penalizes images with streak artifacts the image data processing device 10 reduces streak artifacts during the course of denoising.

In another embodiment the cost function can comprise two or more classifiers 18 that each detect a different type of artifact. Other types of artifacts can for example include a ring artifact, a beam hardening artifact, a metal artifact, bias artifacts in dual-energy images, an undershoot artifact or any other type of artifact known to the person skilled in the art. In this case the de-noising can reduce different artifacts at the same time.

Fig. 3 shows a schematic flow diagram of an embodiment of the method for iteratively reconstructing an image. The image is reconstructed from data representing the image based on an algorithm that comprises a classifier that detects streak artifacts in a patch of the image. The algorithm comprises an iterative reconstruction algorithm that reduces the streak artifacts based on an output of the classifier. The method receives the data representing the image in step 200. In step 210 an initial reconstruction of the image is estimated. In step 220 the reconstructed image is divided into patches. In step 230 streak artifacts are detected in each of the patches of the image based on the classifier. In other embodiments streak artifact detection can be limited to a subset of the patches of the image, e.g., a region selected by a user or another algorithm. In step 240 virtual data representing the image of the estimated reconstruction of the image is calculated. In step 250 a cost function is minimized. The cost function comprises a data discrepancy term that calculates an error between the virtual data representing the image and the received data representing the image and a regularization term that penalizes images with streak artifacts detected by the classifier. In step 260 a reconstructed image is estimated based on the minimization of the cost function.

Steps 220 to 260 are repeated until the occurrence of a predetermined event. In this embodiment the predetermined event is that the user stops the method. In other embodiments the predetermined event can for example be that a difference between the calculated error between the virtual data representing the image and the received data representing the image reaches a value below a predetermined threshold, that for two subsequent iterations the difference between two subsequent values of the cost function are below a predetermined threshold value or that the method was repeated for a predetermined number of steps.

The data representing the image in this embodiment of the method is received from an image scanner, in particular an x-ray scanner used for computed tomography. In this embodiment the data representing the image is projection data. The projection data comprises attenuation values of the volume integrated along a ray. Alternatively detector intensity or photon count readings can for example be used as data representing the image.

The initial reconstruction of the image can for example be an image comprising at each voxel zeros or random numbers or an image reconstructed from the projection data by a different image reconstruction method like filtered back projection. Alternatively the initial image can also be a reconstructed image from an earlier use of the method, e.g., if the same subject or object is scanned at two different points in time the earlier image can be used as initial image for the subsequent reconstruction of the image.

The step 220 of dividing the reconstructed image into patches is performed by arranging a grid over the voxels and thereby dividing the image into patches. The patches are selected from top to bottom and left to right with a predefined volume of 7x7x5 voxels. The patch size is determined during the course of the classifier training in such a way that the classifier performs best. Alternatively the patches can for example have a size of 30x30x30 voxels or any other patch size that allows detecting artifacts. In this embodiment the patches are non-overlapping. In another embodiment the patches can be overlapping. In yet another embodiment the image may be a two dimensional image comprising pixels instead of voxels. Hence if a two dimensional image is reconstructed the patches are two-dimensional and the patch size can for example be 5x5 pixels, 20x20 pixels, 30x30 pixels, or any other patch size that allows detecting artifacts.

In order to detect streak artifacts with the classifier the classifier is trained in a machine-learning process. In this embodiment the training is performed before the classifier is used for detecting streak artifacts in patches of non-training images, i.e., images that are not used for training. In this embodiment the classifier is trained with labeled patches from images which give a binary indication of 0 if a streak artifact is absent in the patch and 1 if a streak artifact is present in the patch. Hence the labeled patches of the image have either the label 0 if there is no streak artifact and 1 if there is a streak artifact. Therefore the classifier learns to detect streak artifacts that are presented in the labeled patches of the images. In another embodiment the classifier can be trained with data representing the image received in step 200 in order to iteratively improve the classifier.

In yet another embodiment the classifier is trained with another type of artifact, e.g., a ring artifact, a beam hardening artifact, a metal artifact, a bias artifact in dual-energy images, an undershoot artifact, or any other type of artifact known to the person skilled in the art. Furthermore another classifier can be trained with labeled patches of another specific type of artifact in order to detect the other specific type of artifact. In one embodiment the algorithm can comprise two or more classifiers that are trained for detecting different specific types of artifacts. Hence the cost function can for example comprise two classifiers each trained for detecting another specific type of artifact in the regularization term and thus two specific types of artifacts can be penalized using the two classifiers. In this case for example the detection of the specific type of artifact of the second classifier can be limited to regions in which the output of the first classifiers is below a predetermined threshold value, indicating no artifact or unlikely presence of an artifact of the specific type detected by the first classifier. This can save calculation time, as regions in which a specific type of artifact is detected may not comprise another type of artifact. However, if two artifacts are known to be correlated, than the second classifier can be used to detect the specific type of artifact detected by the second classifier in regions in which the output of the first classifier is above a predetermined threshold value.

Virtual data representing the image calculated from the image is calculated using a simulation of virtual data using a forward model of the acquisition system. In computed tomography the virtual data is calculated by taking into account the ray from the radiation source to the radiation sensitive detector array that lead to the $i$-th measurement of $\mathbf{y}$. The image values along this ray are weighted depending on their contribution within the extent of the beam of the ray and summed up. Due to the linear nature of this calculation, the contribution of all image values to all rays is modelled in the system matrix $A$, i.e. $A\boldsymbol{\mu}$ is the simulation of the virtual data for all rays corresponding to the measured data y.

The cost function is given by $L(\boldsymbol{\mu}) = f(\mathbf{y}, A\boldsymbol{\mu}) + \beta R(\boldsymbol{\mu})$. The discrepancy term $f(\mathbf{y}, A\boldsymbol{\mu})$ can be any term used by the person skilled in the art for iteratively reconstructing images, e.g., $f(\mathbf{y}, A\boldsymbol{\mu}) = \left\| \mathbf{y} - A\boldsymbol{\mu} \right\|_2^2$, et cetera. In this

$$\beta R(\boldsymbol{\mu}) = \beta \sum_j \psi(Patch(\boldsymbol{\mu}, j)).$$

embodiment the weighted regularization term has the form: $\beta$ is the weighting factor, and $\psi$ is the classifier applied to the function $Patch(\boldsymbol{\mu}, j)$ that is configured to extract the $j$-th patch out of a current image $\boldsymbol{\mu}$.

In the minimization of the cost function the output of the classifier is used as a penalty. The streak artifacts are detected based on scalar output of the classifier. In particular the scalar output of the classifier is between 0 and 1. In this case an output of 0 corresponds to no streak artifact in the patch of the image and an output above 0 implies the presence of a streak artifact in the patch of the image. The output values correspond to a probability of a streak artifact to be present in the patch of the image. Hence, if the output of the classifier is 0, i.e., no streak artifact is present, there is no penalty on the cost function. However, if there is a streak artifact present in the patch the output of the classifier is above 0 and the cost function is increased. Since the cost function is minimized in order to estimate an optimized candidate solution of the image the presence of streak artifacts acts like a penalty. The optimization process therefore tries to reduce the presence of streak artifacts in order to minimize the cost function.

The estimated reconstructed image is calculated as the result from the cost function minimization in order to reconstruct an image with reduced streak artifacts. Reconstruction methods for the reduction of the cost function can be for example newton-like methods like the separable paraboloid surrogates method or gradient-based methods like gradient descent or the nonlinear conjugate gradient method. These methods determine the gradient of the cost function for the current image values in each iteration and take a step in the direction of the negative gradient towards the minimum of the cost function. The image is updated in each iteration.

Fig. 4 shows an embodiment of the method for iteratively de-noising an image. De-noising can be performed in the image domain, i.e., no back and forth transformation between image and projection domain is necessary. The image is denoised from data representing the image based on an algorithm that comprises a classifier that detects streak artifacts in a patch of the image. The algorithm comprises the iterative de-noising algorithm that reduces the streak artifacts based on an output of the classifier.

In the embodiment of the method for iteratively de-noising the image the data representing the image is received in step 300. In step 310 an initial reconstruction of the image is estimated. In step 320 the reconstructed image is divided into patches. In step 330 streak artifacts are detected in each of the patches of the image based on the classifier, i.e., it is detected whether a streak artifact is present in a specific patch of the image for all patches of the image. In other embodiments streak artifact detection can be limited to a subset of the patches of the image, e.g., a region selected by a user or another algorithm. In step 340 a cost function is minimized. The cost function comprises a data discrepancy term that comprises a log-likelihood function of a noise distribution present in the image, a regularization term that penalizes images with a streak artifact detected by the classifier, and a regularization term that penalizes image noise. In step 350 the reconstructed image is estimated based on the minimization of the cost function. The steps 320 to 350 are repeated until the occurrence of a predetermined event. In this embodiment the predetermined event is that the user stops the method. In other embodiments the occurrence of any other predetermined event can stop the method.

In this embodiment of the method of de-noising an image, the cost function for de-noising has the form

$$L(\boldsymbol{\mu}) = \sum_i \frac{(\mu_i - \hat{\mu}_i)^2}{\sigma_i^2} + \beta_1 \sum_j \psi(Patch(\boldsymbol{\mu}, j)) + \beta_2 \phi(\boldsymbol{\mu}).$$

The first term is the data discrepancy term that describes a data noise model with value of $i$-th voxel $\mu_i$, value of $i$-th input voxel $\hat{\mu}_i$ and value of $i$-th statistical weight $\sigma_i$, the second term is a first regularization term with a first weighting factor $\beta_1$, and the classifier $\psi$ applied to the function $Patch(\boldsymbol{\mu}, j)$ that is configured to extract the $j$-th patch out of the image $\boldsymbol{\mu}$, i.e., a current de-noised image, and the third term is a second regularization term with a second weighting factor $\beta_2$, and a function $\phi(\boldsymbol{\mu})$ that penalizes image noise, for example the Huber roughness penalty or any other penalty that penalizes image noise. The first regularization term penalizes images that comprise a streak artifact. In other words due to minimization of the cost function, e.g., by variation of the values of the voxels of the image, patches of the image with streak artifacts are reduced, as the cost function has a higher value for patches of the image with streak artifact than for patches of the image without streak artifact. Therefore the relationship between the streak artifact in the patches of the image and the resulting correction depends on the classifier as the classifier penalizes images that comprise streak artifacts. However, due to the first term the reconstructed image is likely to be not too far off the original image. The classifier can also be configured to detect any other type of artifact. In particular the classifier can be trained by a machine-learning process. In other embodiments the cost function can comprise additional regularization terms that penalize one or more other artifacts. In yet another embodiment the cost function can consist of only the discrepancy term and the first regularization term. In this case the cost function for de-noising can for example have the form:

$$L(\boldsymbol{\mu}) = \sum_i \frac{(\mu_i - \hat{\mu}_i)^2}{\sigma_i^2} + \beta \sum_j \psi(Patch(\boldsymbol{\mu}, j)).$$

While the invention has been illustrated and described in detail in the drawings and foregoing description, such illustration and description are to be considered illustrative or exemplary and not restrictive; the invention is not limited to the disclosed embodiments. For example, it is possible to operate the invention in an embodiment wherein the image is reconstructed or de-noised based on another regularization term known to the person skilled in the art in which the classifier is an additional part of the regularization term. Hence the classifier can be easily integrated in regularizations known to the person skilled in the art, e.g. regularizations based on Gibbs priors or total variation regularizations.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit, processor, or device may fulfill the functions of several items recited in the claims. The mere fact that certain measures are recited in mutually different dependent claims does not indicate that a combination of these measures cannot be used to advantage.

Operations like iteratively reconstructing, iteratively de-noising, receiving data, estimating an initial reconstruction of the image, dividing the reconstructed image into patches, detecting a specific type of artifact in a patch of the image based on the classifier, calculating virtual data representing the image of the estimated reconstruction of the image, minimizing a cost function, estimating the reconstructed image, et cetera performed by one or several units or devices can be performed by any other number of units or devices. These operations and/or the control of the image data processing device and/or image data processing system can be implemented as program code means of a computer program and/or as dedicated hardware.

A computer program may be stored/distributed on a suitable medium, such as an optical storage medium, or a solid-state medium, supplied together with or as part of other hardware, but may also be distributed in other forms, such as via the Internet or other wired or wireless telecommunication systems.

Any reference signs in the claims should not be construed as limiting the scope.

The invention relates to an image data processing device for processing an image that comprises an algorithm memory and a processor. The algorithm memory includes an algorithm that comprises a classifier that detects a specific type of artifact, such as a streak artifact in a patch of the image. Furthermore the algorithm comprises at least one of an iterative reconstruction or de-noising algorithm that reduces the specific type of artifact based on an output of the classifier. The processor is used for iteratively reconstructing and/or de-noising the image from data representing the image based on the algorithm. In one embodiment the algorithm is configured to minimize a cost function comprising a data discrepancy term and a regularization term which comprises the classifier. The output of the classifier can thus be used as a penalty.

**Claims**

1. An image data processing device (10) for processing an image, comprising:

   - an algorithm memory (12) including an algorithm (16) that comprises a classifier (18) that is configured to detect a specific type of artifact in a patch of the image, wherein the algorithm (16) comprises at least one of an iterative reconstruction or de-noising algorithm that is configured to reduce the specific type of artifact based on an output of the classifier (18), and
   - a processor (14) for iteratively reconstructing and/or de-noising the image from data representing the image based on the algorithm (16).

2. The image data processing device (10) according to claim 1, wherein the classifier (18) is trained in a machine-learning process.

3. The image data processing device (10) according to claim 2, wherein the classifier (18) is trained with labeled patches from images which give an indication of a first value if the specific type of artifact is absent in the patch and a second value if the specific type of artifact is present in the patch, wherein the first value is smaller than the second value.

4. The image data processing device (10) according to claim 1, wherein the algorithm (16) is configured to minimize a cost function comprising a data discrepancy term and a regularization term, and wherein the regularization term comprises the classifier (18).

5. The image data processing device (10) according to claim 1, wherein the output of the classifier (18) is defined as a penalty.

6. The image data processing device (10) according to claim 5, wherein the regularization term comprises the term

   $$\beta \sum_j \psi(Patch(\mathbf{\mu}, j)),$$

   wherein $\beta$ is a weighting factor, and $\psi$ is the classifier applied to the function $Patch(\mathbf{\mu}, j)$ that is configured to extract the $j$-th patch out of the image $\mathbf{\mu}$.

7. The image data processing device (10) according to claim 6, wherein the discrepancy term of the cost function

EP 3 404 615 A1

comprises a log-likelihood function of a noise distribution present in the data representing the image.

8. The image data processing device (10) according to claim 6, wherein the cost function for de-noising has the form:

$$L(\mathbf{\mu}) = \sum_i \frac{(\mu_i - \hat{\mu}_i)^2}{\sigma_i^2} + \beta \sum_j \psi(Patch(\mathbf{\mu}, j)),$$

wherein the first term is the data discrepancy term that describes a data noise model with value of $i$-th voxel $\mu_i$, value of $i$-th input voxel $\hat{\mu}_i$ and value of $i$-th statistical weight $\sigma_i$, and the second term is the regularization term.

9. The image data processing device (10) according to claim 1, wherein the specific type of artifact in a patch of the image is a streak artifact, a ring artifact, a beam hardening artifact, a metal artifact, a bias artifact in dual-energy images or an undershoot artifact.

10. The image data processing device (10) according to claim 1, wherein the classifier (18) depends on a parameter of a scan setting for receiving the data representing the image.

11. An image data processing system (100) comprising the image data processing device (10) according to claim 1 and a receiving unit (110) for receiving data representing the image, wherein the receiving unit (110) is configured to supply the received data representing the image to the image data processing device (10) for iteratively reconstructing and/or de-noising the image from the data representing the image.

12. Image data processing system (100) according to claim 11, wherein the image data processing system (100) is a computed tomography scanner or a tomosynthesis scanner.

13. A method for iteratively reconstructing and/or de-noising an image, wherein the image is reconstructed and/or de-noised from data representing the image based on an algorithm (16) that comprises a classifier (18) that detects a specific type of artifact in a patch of the image, and wherein the algorithm (16) comprises at least one of an iterative reconstruction or de-noising algorithm that reduces the specific type of artifact based on an output of the classifier (18).

14. Method for iteratively reconstructing and/or de-noising an image according to claim 13 comprising the steps:

    - receiving the data representing the image,
    - estimating an initial reconstruction of the image,
    - dividing the reconstructed image into patches,
    - detecting the specific type of artifact in a patch of the image based on the classifier (18),
    - minimizing a cost function comprising a data discrepancy term and a regularization term that penalizes images with the specific type of artifact detected by the classifier (18), and
    - estimating the reconstructed image based on the minimization of the cost function,

wherein the steps dividing the reconstructed image into patches, detecting the specific type of artifact in a patch of the image based on the classifier (18), minimizing a cost function comprising a data discrepancy term and a regularization term that penalizes images with the specific type of artifact detected by the classifier (18), and estimating the reconstructed image based on the minimization of the cost function, are repeated until the occurrence of a predetermined event.

15. A computer program for iteratively reconstructing and/or de-noising an image, wherein the computer program comprises program code means for causing a processor (14) to carry out the method as defined in claim 13 or 14, when the computer program is run on the processor (14)

# FIG. 1

FIG. 2

FIG. 3

FIG. 4

Europäisches
Patentamt

European
Patent Office

Office européen
des brevets

# EUROPEAN SEARCH REPORT

Application Number

EP 17 17 1477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZENG DONG ET AL: "Iterative image reconstruction for multienergy computed tomography via structure tensor total variation regularization", PROGRESS IN BIOMEDICAL OPTICS AND IMAGING, SPIE - INTERNATIONAL SOCIETY FOR OPTICAL ENGINEERING, BELLINGHAM, WA, US, vol. 9783, 31 March 2016 (2016-03-31), pages 978349-978349, XP060066183, ISSN: 1605-7422, DOI: 10.1117/12.2217335 ISBN: 978-1-5106-0027-0 | 1,2,4-15 | INV. G06T11/00 |
| A | * the whole document * | 3 | |
| A | GUOBAO WANG ET AL: "Patch-based regularization for iterative PET image reconstruction", 2011 8TH IEEE INTERNATIONAL SYMPOSIUM ON BIOMEDICAL IMAGING: FROM NANO TO MACRO (ISBI 2011), IEEE, UNITED STATES, 30 March 2011 (2011-03-30), pages 1508-1511, XP031944817, DOI: 10.1109/ISBI.2011.5872687 ISBN: 978-1-4244-4127-3 * page 1508 - page 1510 * | 1-15 | |
| A | GUOBAO WANG ET AL: "Penalized Likelihood PET Image Reconstruction Using Patch-Based Edge-Preserving Regularization", IEEE TRANSACTIONS ON MEDICAL IMAGING, IEEE SERVICE CENTER, PISCATAWAY, NJ, US, vol. 31, no. 12, December 2012 (2012-12), pages 2194-2204, XP011491180, ISSN: 0278-0062, DOI: 10.1109/TMI.2012.2211378 * page 2195, right-hand column - page 2196, right-hand column * | 1-15 | |

TECHNICAL FIELDS SEARCHED (IPC)

G06T

The present search report has been drawn up for all claims

| Place of search | Date of completion of the search | Examiner |
|---|---|---|
| Munich | 12 July 2017 | Werling, Alexander |

EPO FORM 1503 03.82 (P04C01)

EP 3 404 615 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   US 20140314331 A1